(19) **Europäisches Patentamt / European Patent Office / Office européen des brevets**

(11) **EP 2 762 461 B1**

(12) **EUROPEAN PATENT SPECIFICATION**

(45) Date of publication and mention
of the grant of the patent:
**21.11.2018   Bulletin 2018/47**

(51) Int Cl.:
***C03C 21/00*** [(2006.01)]

(21) Application number: **12837271.1**

(22) Date of filing: **27.09.2012**

(86) International application number:
**PCT/JP2012/074925**

(87) International publication number:
**WO 2013/047675 (04.04.2013 Gazette 2013/14)**

(54) **CHEMICALLY STRENGTHENED GLASS AND METHOD FOR PRODUCING SAME**

CHEMISCH GEHÄRTETES GLAS UND VERFAHREN ZUR HERSTELLUNG DESSELBEN

VERRE TREMPÉ CHIMIQUEMENT ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2011   JP 2011215606**

(43) Date of publication of application:
**06.08.2014   Bulletin 2014/32**

(73) Proprietor: **Central Glass Company, Limited
Yamaguchi 755-0001 (JP)**

(72) Inventors:
• **MATSUDA Yu**
  **Matsusaka-shi**
  **Mie 515-0001 (JP)**
• **TSUZUKI Tatsuya**
  **Matsusaka-shi**
  **Mie 515-0001 (JP)**
• **MITAMURA Naoki**
  **Matsusaka-shi**
  **Mie 515-0001 (JP)**
• **MURAMOTO Tadashi**
  **Matsusaka-shi**
  **Mie 515-0001 (JP)**

(74) Representative: **Vossius & Partner
Patentanwälte Rechtsanwälte mbB
Siebertstrasse 3
81675 München (DE)**

(56) References cited:
  **JP-A- H0 848 537       JP-A- S6 483 539
  JP-A- H01 203 244       JP-A- 2007 051 064
  JP-A- 2008 195 602      JP-A- 2011 133 800**

  **JP-B- S4 714 837       US-A- 3 506 423
  US-A- 3 798 013         US-A- 4 273 832**

• CLARK D E ET AL: "Processing materials with microwave energy", MATERIALS SCIENCE AND ENGINEERING A: STRUCTURAL MATERIALS: PROPERTIES, MICROSTRUCTURES AND PROCESSING, ELSEVIER BV, NL, vol. 287, no. 2, 15 August 2000 (2000-08-15), pages 153-158, XP008125077, ISSN: 0921-5093, DOI: 10.1016/S0921-5093(00)00768-1 [retrieved on 2000-07-24]
• KARLSSON S ET AL: "Surface analysis of float glass using surface ablation cell (SAC). Part 2. Determination of the diffusion characteristics of K+-Na+ ion exchange", GLASS TECHNOLOGY: EUROPEAN JOURNAL OF GLASS SCIENCE & TECHNOLOGY PART A, SOCIETY OF GLASS TECHNOLOGY, SHEFFIELD, GB, vol. 51, no. 2, 1 April 2010 (2010-04-01), pages 55-62, XP001553386, ISSN: 1753-3546
• HARMON GARFINKEL: "Strengthening Glass by ION EXCHANGE", THE GLASS INDUSTRY,, vol. 50, no. 2, 1 February 1969 (1969-02-01), pages 74-76, XP001251178,
• SHEN J ET AL: "CONTROL OF CONCENTRATION PROFILES IN TWO STEP ION EXCHANGED GLASSES", PHYSICS AND CHEMISTRY OF GLASSES, SOCIETY OF GLASS TECHNOLOGY, SHEFFIELD, GB, vol. 44, no. 4, 1 August 2003 (2003-08-01) , pages 284-292, XP001174924, ISSN: 0031-9090

EP 2 762 461 B1

## Description

TECHNICAL FIELD

The present invention relates to a chemically strengthened glass, and specifically relates to a chemically strengthened glass suitable for substrates for displays, cover glasses for touch panel displays and mobile phones, and cover glasses and substrates for solar cells.

BACKGROUND ART

In recent years, cover glasses have been increasingly used on mobile devices such as mobile phones for the purpose of protecting displays and improving the aesthetics of displays. A trend toward thinner and lighter mobile devices has naturally created a demand for thinner cover glasses. However, thinner cover glasses have a lower strength, and are therefore susceptible to breaking when exposed to an impact such as dropping impact during use or carrying. Such glasses have the disadvantage of failing to play an essential role in the protection of display devices.

A possible strategy to solve the above problem is to improve the strength of cover glasses. As a method for improving the strength, formation of a compressive stress layer at the surface of a glass has been known. The typical methods for forming a compressive stress layer at the surface of a glass are thermal strengthening (physical strengthening) and chemical strengthening. Thermal strengthening involves heating a surface of a glass plate nearly to the softening point of the glass plate and rapidly cooling it with a cool blast or the like. Chemical strengthening involves ion exchange of glass at a temperature equal to or lower than the glass-transition temperature to replace alkali metal ions having a smaller ionic radius (for example, sodium ions) with alkali metal ions having a larger ionic radius (for example, potassium ions) on the surface of the glass.

As described above, cover glasses are required to have a small thickness. However, such thermal strengthening, when performed on a thin glass, is less likely to establish a large temperature differential between the surface and the inside of the glass, and therefore less likely to provide a compressive stress layer, and fails to provide desired high strength.

Therefore, cover glasses strengthened by chemical strengthening are usually used.

Chemical strengthening involves contacting a glass containing sodium ions as an alkali metal component with a molten salt that contains potassium ions to produce ion exchange between the sodium ions in the glass and the potassium ions in the molten salt, thereby forming a compressive stress layer in the surface layer to improve the mechanical strength.

In the glass produced through chemical strengthening, potassium ions in the molten salt have replaced sodium ions in the glass, and are thus introduced in a surface layer of the glass, which is accompanied by a volume expansion of the surface layer. Under the temperature conditions of this method, the glass cannot flow in a viscous manner at a speed high enough to relax the volume expansion. Consequently, the expansion remains as a compressive residual stress in the surface layer of the glass, and improves the strength.

Accordingly, in order to efficiently improve glass strength, ion exchange of the surface layer of the glass needs to be efficiently performed. The ion exchange can be efficiently performed by contacting the glass with a molten salt at higher temperatures and for a longer period of time. However, this also causes an increase in the rate of the above relaxing of the expansion, which accelerates relaxation of a compressive stress generated by ion exchange. Thus, in order to prepare a glass having the maximum compressive stress in the surface layer by contacting the glass with a molten salt at a specific temperature, the glass needs to be in contact with the molten salt for an appropriate period of time. Such a maximum compressive residual stress is increased by contacting a glass at lower contact temperatures, but, in this case, a glass tends to need to be in contact with a molten salt for a significantly-long time.

A flawless glass having a high surface compressive stress shows extremely high strength even if the glass does not have a deep compressive stress layer. In this case, the depth of the compressive stress layer needs to be at least deeper than the depth of a microcrack called "Griffith flaw", which may cause breakage of a glass even by a significantly lower stress than the theoretical strength.

If chemical strengthening is performed on a thinner glass, a tensile stress inside the glass unfortunately increases so as to be balanced with a high surface compressive stress. When a crack with a depth larger than that of the surface compressive stress layer is formed in a glass having a high inner tensile stress, high tension is applied to the tip of the crack, thereby spontaneously breaking the glass. Such spontaneous breakage of a glass may be suppressed by reducing the depth of a surface compressive stress layer to reduce an inner tensile stress. However, such a glass is sensitive to a flaw or a crack, and does not have desired strength.

A reason why a chemically strengthened glass is commercially popular is that they are thin but highly strengthened and can be cut even though it is already strengthened. In contrast, a glass strengthened by the thermal strengthening has difficulty in processing (e.g. cutting) because the glass will shatter when a preliminary crack for cutting is formed on the surface.

In recent years, a manufacturing method has been developed in which a single chemically strengthened glass preliminary provided with touch sensors is cut into pieces of any shape, that is, plural products are cut out from a single large-size chemically strengthened glass. Therefore, the importance of cutting easiness is becoming increasingly apparent.

As described above, chemically strengthened glasses can be cut, but with great difficulty. Cutting difficulty of chemically strengthened glasses is a main reason for reducing the production yield, and such cutting difficulty also causes breakage or other problems of products made of chemically strengthened glasses.

For example, Patent Literatures 1 and 2 have disclosed a soda-lime-based chemically strengthened glass which can be appropriately cut.

Other chemically strengthened glasses and methods for chemical strengthening glasses have been reported. For example, Patent Literature 3 has disclosed a chemically strengthened glass improved in glass strength by, as a primary treatment, contacting a salt containing only alkali metal ions A, which are the largest in amount among all the alkali metal ion components of the glass, to increase the amount of the alkali metal ions A in the surface layer; and, as a secondary treatment, replacing the alkali metal ions A with alkali metal ions B, which have a larger ionic radius than the alkali metal ions A.

Patent Literature 4 has disclosed a chemical strengthening method. The method includes, as a primary treatment, contacting a glass article with a salt at a temperature equal to or lower than the strain point of the glass article for an appropriate period of time. Here, the salt contains alkali metal ions A and alkali metal ions B having a larger ionic radius than the alkali metal ions A such that the proportion of the alkali metal ions A should meet a proportion P (which is a proportion of the alkali metal ions A to the total amount of the alkali metal ions A and B). The method subsequently includes, as a secondary treatment, contacting the glass article with a salt having a proportion Q, which is smaller than the proportion P, under at least one condition selected from conditions where a temperature is lower than the temperature in the primary treatment and a time period is shorter than that in the primary treatment.

Further, Patent Literatures 5 and 6 have disclosed glass (aluminosilicate glass) suitable for chemical strengthening in view of composition, which is different from soda-lime-based glass.

CITATION LIST

- Patent Literature

Patent Literature 1: JP 2004-359504 A
Patent Literature 2: JP 2004-83378 A
Patent Literature 3: JP H8-18850 B
Patent Literature 4: JP S54-17765 B
Patent Literature 5: JP 2011-213576 A
Patent Literature 6: JP 2010-275126 A

SUMMARY OF INVENTION

- Technical Problem

Patent Literatures 1 and 2 have disclosed soda-lime-based chemically strengthened glasses which can be appropriately cut.

However, Patent Literature 1 has focused only on the surface hardness among various properties of a chemically strengthened glass, but is silent on a surface compressive stress and a depth of a compressive stress layer, which are important properties of a chemically strengthened glass.

Patent Literature 2 describes the surface compressive stress and the depth of a compressive stress layer. Patent Literature 2 has reported that the surface compressive stress of target soda-lime glass is the same level as that of a general chemically strengthened glass. The surface compressive stress of soda-lime glass will not be likely to be improved based on the teachings in Patent Literature 2.

Improvement in strength of a chemically strengthened glass in Patent Literature 3 is characterized mainly by a primary treatment, that is, a step of contacting a glass article with a salt that contains only sodium ions, which are a main ionic component of the glass article. In this method, since the amount of sodium ions, which are to be exchanged, is increased in the surface layer of a glass through the primary treatment, a compressive residual stress generated by exchanging sodium ions with potassium ions will be increased in the secondary treatment. The present inventors have studied on improvement of the strength and the cutting easiness of the chemically strengthened glass based on the teachings of Patent Literature 3, and found some points to be improved.

Specifically, there is room for improvement in reducing the stress relaxation occurred during exchange of sodium ions with potassium ions in the secondary treatment. Further, the cutting easiness of a chemically strengthened glass with high strength has not been examined yet.

In addition, the primary treatment increases the amount of sodium ions in the surface of the glass layer, which are to be exchanged, but the treatment may take a lot of time to form a compressive stress layer having a depth in a similar degree to that of a compressive stress layer of a conventional chemically strengthened glass prepared through one-step treatment.

Furthermore, according to the teachings of Patent Literature 3, a surface of a glass may become cloudy due to contacting with excess sodium ions.

Patent Literature 4 has disclosed chemical strengthening method which allows improvement in strength of a glass.

However, the conditions of the chemical strengthening satisfying the requirement in Patent Literature 4 include huge combinations of various conditions. In addition, Patent Literature 4 focuses only on a subject for improvement in glass strength, and cutting easiness of a chemical strengthening glass is not considered.

The soda-lime-based chemically strengthened glass prepared according to Example 1 in Patent Literature 4 was difficult to cut. According to Example 1, it required a lot of time for carrying out the primary and secondary treatments. Therefore, the method is not suitable for practical mass production.

Patent Literatures 5 and 6 have disclosed glass (aluminosilicate glass) suitable for chemical strengthening in view of chemical composition which is different from soda-lime-based glass.

In general, soda-lime glass is not suitable for chemical strengthening that involves ion exchange in a surface layer of a glass, although it has been used as a material for windowpanes, glass bins, and the like, and is a low-cost glass suitable for mass production. On the other hand, aluminosilicate glass is designed to have a higher ion exchange capacity than soda-lime glass by, for example, increasing the amount of $Al_2O_3$, which improves the ion exchange capacity, and adjusting the ratio between alkali metal oxide components $Na_2O$ and $K_2O$ and/or the ratio between alkaline-earth metal oxide components MgO and CaO, and thus is optimized for chemical strengthening. Aluminosilicate glass, which has higher ion exchange capacity than soda-lime glass as described above, is able to form a deep compressive stress layer having a depth of 20 $\mu$m or more, or a deeper depth of 30 $\mu$m or more. A deep compressive stress layer has high strength and high damage resistance, but unfortunately, this means that it does not allow even a preliminary crack for glass cutting to be formed thereon. Even if a crack can be formed on the glass, it is impossible to cut the glass along the crack, and if a deeper crack is formed, the glass may shatter. Thus, it is very difficult to cut chemically strengthened aluminosilicate glasses.

Even if the problem of cutting were overcome, aluminosilicate glass requires a higher melting temperature than soda-lime glass because it contains larger amounts of $Al_2O_3$ and MgO, which elevate the melting temperature, compared to soda-lime glass. In a mass production line, it is produced via a highly viscous molten glass, which leads to poor production efficiency and high costs.

Accordingly, there is a demand for a technique enabling use of soda-lime glass, which is widely used for glass plates, is more suitable for mass production than aluminosilicate glass, and therefore is available at low cost, and is already used in various applications, as a glass material. However, it would be difficult to produce a chemically strengthened glass having sufficient strength and cutting easiness by treating soda-lime glass in a conventional manner.

Thus, several problems inherent to the prior art have been described above. It is hard to say whether any technical studies have been made so far on the development of a chemically strengthened glass with sufficient strength and cutting ease, made of soda-lime glass, a glass which is poorly suited for chemical strengthening in view of its composition. In order to solve the above problems associated with conventional techniques, the present invention aims to provide a chemically strengthened glass which can be cut more easily and has a higher compressive residual stress than usual with any of the said conventional techniques applied to soda-lime glass, which is not particularly suitable for chemical strengthening in view of its composition. Further, the present invention aims to provide a method of manufacturing the chemically strengthened glass.

- Solution to Problem

A chemically strengthened glass according to the first aspect of the present invention is
a chemically strengthened glass manufactured by ion exchange of a surface layer of a glass article to replace alkali metal ions A which are the largest in amount among all the alkali metal ion components of the glass article with alkali metal ions B having a larger ionic radius than the alkali metal ions A,
wherein the glass article before the ion exchange is made of soda-lime glass substantially composed of $SiO_2$: 65 to 75%, $Na_2O+K_2O$: 5 to 20%, CaO: 2 to 15%, MgO: 0 to 10%, and $Al_2O_3$: 0 to 5% on a mass basis,
the chemically strengthened glass after the ion exchange has a surface compressive stress of 600 to 900 MPa, and has a compressive stress layer with a depth of 5 to 20 $\mu$m at a surface of the glass, and
the slope of a linear function is from -4 to -0.4, which is calculated by the following procedure:

firstly, a quartic curve is prepared by approximating plotted data by a least-squares method on a first graph, where the vertical axis represents a proportion of an amount of the alkali metal ions B relative to a total amount of the alkali metal ions A and B, and the horizontal axis represents a depth of the glass from the surface; and
secondly, the linear function is prepared by approximating plotted data by a least-squares method within the range of 0 to 5 um of a depth of the glass from the surface on a second graph, where the vertical axis represents an absolute value of a differential coefficient of the quartic curve, the differential coefficient being obtained by first differentiation of the quartic curve with respect to the depth of the glass from the surface, and the horizontal axis represents the depth of the glass from the surface.

The chemically strengthened glass according to the first aspect of the present invention after the ion exchange has a surface compressive stress of 600 to 900 MPa, and has a compressive stress layer with a depth of 5 to 20 $\mu$m at the surface of the glass.

A chemically strengthened glass having a surface compressive stress of less than 600 MPa is poor in glass strength, and therefore may not withstand commercial use, and is not particularly suitable for cover glasses which are frequently exposed to external contact. A chemically strengthened glass having a surface compressive stress of more than 900 MPa is difficult to cut. In particular, if such a glass is thin, the inner tensile stress increases with an increase in the compressive stress, and whereby the glass may be broken when a crack is formed on the glass.

A chemically strengthened glass having a compressive stress layer with a depth of less than 5 $\mu$m may not be prevented from being broken because of microcracks (Griffith flaws) formed on the glass before chemical strengthening during transportation and the like. Further, such a chemically strengthened glass has poor damage resistance, and therefore cannot withstand commercial use. On the other hand, a chemically strengthened glass having a compressive stress layer with a thickness of more than 20 $\mu$m may not be easily split along a scribe line on cutting the glass.

The most important feature of the chemically strengthened glass according to the first aspect of the present invention is that it has an improved surface compressive stress, but has a compressive stress layer with a limited depth, and is easily cut and has high strength. In order to evaluate such a glass, the slope of a linear function is determined as follows. Firstly, a quartic curve is prepared by approximating plotted data by a least-squares method on a first graph, where the vertical axis represents a proportion of an amount of the alkali metal ions B relative to the total amount of the alkali metal ions A and B, and the horizontal axis represents a depth of the glass from the surface; and secondly, the linear function is prepared by approximating plotted data by a least-squares method within the range of 0 to 5 um of a depth of the glass from the surface on a second graph, where the vertical axis represents an absolute value of a differential coefficient of the quartic curve, the differential coefficient being obtained by first differentiation of the quartic curve with respect to the depth of the glass from the surface, and the horizontal axis represents the depth of the glass from the surface. A slope of more than -0.4 shows that the surface compressive stress is not improved and the depth of the compressive stress layer increases to result in difficulty in cutting. On the other hand, a slope of less than -4 shows that the surface compressive stress is improved. However, a glass with a high compressive stress breaks even by a small scratch formed thereon, and a compressive stress layer with a small depth is penetrated even by a small scratch formed thereon. As a result, practical glass strength may not be obtained.

In the chemically strengthened glass according to the first aspect of the present invention, soda-lime glass having a specific composition is used as a glass before the ion exchange.

This feature provides an advantage in that unlike methods using glasses that are modified from a soda-lime glass by, for example, using different materials to be suitable for chemical strengthening, the method of the present invention can avoid production cost increases that are a result of a change of the materials, reduced production efficiency, and the like.

For example, to increase the amount of aluminum oxide in a composition (e.g. the design of the composition of aluminosilicate glass) is effective for increasing the ion exchange capacity, but is accompanied by not only increased material costs but also remarkable elevation of the melting temperature of the glass, which contributes to remarkably high production costs of the glass. Another effective way to increase the ion exchange capacity is to use MgO as the alkaline-earth component instead of CaO. This, however, also elevates the melting temperature of the glass, which leads to an increase in production costs.

As for the chemically strengthened glass according to the first aspect of the present invention, the ratio of the depth of the compressive stress layer to a minimum value of the depth of the glass from the surface when the absolute value of the differential coefficient in the second graph is 0 is preferably not less than 0.70.

As the ratio of the depth of the compressive stress layer to a minimum value of the depth of the glass from the surface when the absolute value of the differential coefficient in the second graph is 0 approaches 0, regions which are ion exchanged, but do not contribute to the generation of the compressive stress increase.

On the other hand, the ratio of the depth of the compressive stress layer to a minimum value of the depth of the glass from the surface when the absolute value of the differential coefficient in the second graph is 0 of not less than 0.70 allows efficient use of the compressive stress generated by the alkali metal ions B introduced in the glass by exchanging with the alkali metal ions A.

As for the chemically strengthened glass according to the first aspect of the present invention, the ion exchange preferably includes: a first step of contacting the glass article with a first salt that includes the alkali metal ions A and B at a proportion P of the alkali metal ions A as expressed as a molar percentage of the total amount of the alkali metal ions A and B; and

a subsequent second step of contacting the glass article with a second salt that includes the alkali metal ions A and B at a proportion Q of the alkali metal ions A as expressed as a molar percentage of the total amount of the alkali metal ions A and B, where the proportion Q is smaller than the proportion P.

A surface compressive stress and a depth of a compressive stress layer of a chemically strengthened glass are affected by the temperature and the required period of time on chemical strengthening, and the type of a selected treating liquid and the active property of the treatment liquid. Further, the surface compressive stress and the depth of the compressive stress layer of a chemically strengthened glass may depend on the state of ion exchange in the glass.

Generally, the higher temperature on the treatment or the longer period of time for the treatment leads to the deeper depth of formed compressive stress layer. However, such operations sometimes act to reduce a surface compressive stress. In particular, in the case of conventional one-step chemical strengthening, a surface compressive stress and a depth of a compressive stress layer are in a trade-off relationship, and are difficult to keep both to sufficient levels. On the contrary, two-step chemical strengthening (ion exchange) and appropriate selection of temperature, period of time on treatment, or treatment liquid make it possible to effectively enhance the effect of each step, thereby producing a chemically strengthened glass which can be cut and has a high surface compressive stress.

Specifically, the glass article is allowed to contact with a first salt that includes the alkali metal ions A and B at a proportion P of the alkali metal ions A as expressed as a molar percentage of the total amount of the alkali metal ions A and B, as a first step; and after the first step, the glass article is allowed to contact with a second salt having a proportion Q, which is smaller than the proportion P, as a second step.

According to the above method, it is considered that the composition of the surface layer of the glass can be modified into suitable one for chemical strengthening in the first step, while the alkali metal ions A (for example, sodium ions), which contribute to generation of the compressive stress, are left in the surface layer, even using soda-lime glass. As a result, the stress relaxation occurred in the second step can be prevented. Thus, a chemically strengthened glass with a high surface compressive stress can be prepared.

The proportion P in the first salt used in the first step is higher than the proportion Q in the second salt used in the second step. In other words, the first salt has a larger amount of the alkali metal ions A than the second salt.

If the proportion Q is higher than the proportion P, the alkali metal ions A (for example, sodium ions) remaining in the glass in the first step are not replaced with the alkali metal ions B (for example, potassium ions) in the second salt used in the second step, efficiently. As a result, a desired compressive stress is difficult to generate.

As for the chemically strengthened glass according to the first aspect of the present invention, in the first step, 30 to 75% by mass of the alkali metal ions A in the surface layer of the glass article are preferably replaced with the alkali metal ions B, and, in the second step, 50 to 100% of the alkali metal ions A remaining in the surface layer of the glass article are preferably replaced with the alkali metal ions B.

As for the chemically strengthened glass according to the first aspect of the present invention, the proportion P in the first salt used in the first step is preferably from 5 to 50 mol%, and the depth of the compressive stress layer formed through the first step at the surface of the glass is preferably from 5 to 23 $\mu$m.

If the depth of the compressive stress layer formed through the first step is too small, the composition of the surface layer of the glass is not sufficiently modified in the primary treatment, whereby the stress relaxation occurred in the secondary treatment may therefore not be sufficiently prevented. On the contrary, if the depth of the compressive stress layer formed through the first step is too large, the depth of the compressive stress layer finally formed through the secondary treatment becomes large, which adversely affects cutting easiness of glass.

As described above, the stress relaxation in the secondary treatment can be prevented by performing the primary treatment in the present invention. However, glass is inherently impossible to completely prevent progress of stress relaxation. Therefore, a slight stress relaxation may be occurred in the secondary treatment, and thus the compressive stress layer finally remaining after the secondary treatment may be different in depth from the compressive stress layer formed through the primary treatment. On the contrary, the amount of ions exchanged in the secondary treatment is greater than that of ions exchanged in the primary treatment, whereby the depth of the compressive stress layer formed through the second step may be slightly deeper than that of the compressive stress layer formed through the primary treatment. However, the compressive stress layer finally formed through the second step is only slightly different in depth from the compressive stress layer formed through the first step (the primary treatment). Since the cutting easiness of the resulting chemically strengthened glass mainly depends on the depth of the compressive stress layer formed through the first step, it is important to control the depth of the compressive stress layer formed through the first step.

Thus, the glass obtained through the first step preferably has a compressive stress layer with a depth of 5 to 23 $\mu$m at the surface thereof.

In relation to the depth of the compressive stress layer formed through the first step, the temperature of the first salt and the period of time for contact of the glass article with the first salt should be controlled depending on the proportion P in the first salt.

If the proportion P is too high, the composition of the surface layer of glass is not sufficiently modified in the primary treatment (ion exchange in the first step), whereby the stress relaxation occurred in the secondary treatment (ion exchange in the second step) may therefore not be sufficiently prevented, and the surface is likely to become cloudy.

On the contrary, if the proportion P is too low, most of the alkali metal ions A in glass are ion exchanged with the alkali metal ions B although the composition of the surface layer of the glass is sufficiently modified in the first step. Therefore, ion exchange is less likely to occur in the second step, which causes difficulty in generation of a desired compressive stress.

Thus, the proportion P in the first salt is preferably 5 to 50 mol%.

If the proportion Q is too high, the alkali metal ions A remaining after the first step in the surface layer may not be ion exchanged with the alkali metal ions B, sufficiently, and therefore a desired level of a compressive stress may be difficult to be obtained through the second step.

Thus, the proportion Q in the second salt is preferably 0 to 10 mol%.

A method of manufacturing the chemically strengthened glass according to the first aspect of the present invention includes the steps of:

a first step of contacting a glass article with a first salt that includes the alkali metal ions A and B at a proportion P of the alkali metal ions A as expressed as a molar percentage of the total amount of the alkali metal ions A and B; and
a subsequent second step of contacting the glass article with a second salt that includes the alkali metal ions A and B at a proportion Q of the alkali metal ions A as expressed as a molar percentage of the total amount of the alkali metal ions A and B, where the proportion Q is smaller than the proportion P.

In the method of manufacturing the chemically strengthened glass according to the first aspect of the present invention, in the first step, 30 to 75% by mass of the alkali metal ions A in the surface layer of the glass article are preferably replaced with the alkali metal ions B, and in the second step, 50 to 100% of the alkali metal ions A remaining in the surface layer of the glass article are preferably replaced with the alkali metal ions B.

In the method of manufacturing the chemically strengthened glass according to the first aspect of the present invention, the proportion P in the first salt used in the first step is preferably from 5 to 50 mol%, and the depth of the compressive stress layer formed through the first step at the surface of the glass is preferably 5 to 23 $\mu$m.

Further, in the method of manufacturing the chemically strengthened glass according to the first aspect of the present invention, the proportion Q in the second salt used in the second step is preferably from 0 to 10 mol%.

A chemically strengthened glass according to the second aspect of the present invention is a chemically strengthened glass manufactured by ion exchange of a surface layer of a glass article to replace alkali metal ions A which are the largest in amount among all the alkali metal ion components of the glass article with alkali metal ions B having a larger ionic radius than the alkali metal ions A,

the glass article before the ion exchange being made of soda-lime glass substantially composed of $SiO_2$: 65 to 75%, $Na_2O+K_2O$: 5 to 20%, CaO: 2 to 15%, MgO: 0 to 10%, and $Al_2O_3$: 0 to 5% on a mass basis,

the ion exchange including a first step of contacting the glass article with a first salt that includes the alkali metal ions A and B at a proportion P of the alkali metal ions A as expressed as a molar percentage of the total amount of the alkali metal ions A and B, the proportion P being 5 to 50 mol%,

the chemically strengthened glass obtained through the first step having a compressive stress layer with a depth of 5 to 23 $\mu$m at a surface of the glass.

As for the chemically strengthened glass according to the second aspect of the present invention, in the first step, 30 to 75% by mass of the alkali metal ions A in the surface layer of the glass article are preferably replaced with the alkali metal ions B.

A method of manufacturing the chemically strengthened glass according to the second aspect of the present invention includes the steps of:

preparing a glass article made of soda-lime glass substantially composed of $SiO_2$: 65 to 75%, $Na_2O+K_2O$: 5 to 20%, CaO: 2 to 15%, MgO: 0 to 10%, and $Al_2O_3$: 0 to 5% on a mass basis; and
a first step of contacting the glass article with a first salt that includes alkali metal ions A which are the largest in amount among all the alkali metal ion components of the glass article and alkali metal ions B having a larger ionic radius than the alkali metal ions A at a proportion P of the alkali metal ions A as expressed as a molar percentage of the total amount of the alkali metal ions A and B, the proportion P being 5 to 50 mol%,

the glass obtained through the first step having a compressive stress layer with a depth of 5 to 23 μm at a surface of the glass.

In the method of manufacturing the chemically strengthened glass according to the second aspect of the present invention, 30 to 75% by mass of the alkali metal ions A in the surface layer of the glass article are preferably replaced with the alkali metal ions B, in the first step.

The chemically strengthened glass according to the second aspect of the present invention is a glass obtained through primary chemical strengthening in the first step. Therefore, such a glass can be made into a chemically strengthened glass equivalent to a chemical strengthened glass obtained through two-step chemical strengthening by subjecting additional chemical strengthening.

Further, the two-step chemical strengthening allows reduction of variation of product quality. Therefore, in the case of purchasing the chemically strengthened glass according to the second aspect of the present invention, variation of the product quality of the glass can be easily reduced by subjecting the glass only to one-step chemical strengthening.

- Advantageous Effects of Invention

The chemically strengthened glass according to the present invention is easily cut and has a higher compressive residual stress than conventional one.

BRIEF DESCRIPTION OF DRAWINGS

Fig. 1 is a first graph as for the chemically strengthened glass according to Example 1.
Fig. 2 is a second graph as for the chemically strengthened glass according to Example 1.
Fig. 3 is a first graph as for the chemically strengthened glass according to Comparative Example 1.
Fig. 4 is a second graph as for the chemically strengthened glass according to Comparative Example 1.
Fig. 5 is a first graph as for the chemically strengthened glass according to Comparative Example 2.
Fig. 6 is a second graph as for the chemically strengthened glass according to Comparative Example 2.

DESCRIPTION OF EMBODIMENTS

The following description is offered to specifically illustrate an embodiment of the present invention. It should be noted that the present invention is not limited only to this embodiment, and the embodiment can be appropriately altered within the scope of the present invention.

(Chemically strengthened glass)

A chemically strengthened glass according to one embodiment of the present invention is manufactured by ion exchange of a surface layer of a glass article to replace alkali metal ions A which are the largest in amount among all the alkali metal ion components of the glass with alkali metal ions B having a larger ionic radius than the alkali metal ions A.

In cases where the alkali metal ions A are, for example, sodium ions ($Na^+$ ions), the alkali metal ions B may be at least one species of ions selected from potassium ion ($K^+$ ion), rubidium ion ($Rb^+$ ion), and cesium ion ($Cs^+$ ion). In cases where the alkali metal ions A are sodium ions, the alkali metal ions B are preferably potassium ions.

In the ion exchange, one or two or more of nitrates, sulfates, carbonates, hydroxide salts, and phosphates containing at least the alkali metal ions B, may be used. In cases where the alkali metal ions A are sodium ions, nitrates containing at least potassium ions are preferred.

As for a chemically strengthened glass according to one embodiment of the present invention, the glass before the ion exchange is made of soda-lime glass, and the soda-lime glass is substantially composed of $SiO_2$: 65 to 75%, $Na_2O+K_2O$: 5 to 20%, CaO: 2 to 15%, MgO: 0 to 10%, and $Al_2O_3$: 0 to 5% on a mass basis.

The expression "$Na_2O+K_2O$: 5 to 20%" herein means that the total amount of $Na_2O$ and $K_2O$ in the glass is 5 to 20% by mass.

$SiO_2$ is a major constituent of glass. If the $SiO_2$ content is less than 65%, the glass has reduced strength and poor chemical resistance. On the other hand, if the $SiO_2$ content is more than 75%, the glass becomes a highly viscous melt at high temperatures. Such a glass is difficult to form into a shape. Accordingly, the content is in the range of 65 to 75%, and preferably in the range of 68 to 73%.

Na$_2$O is an essential component that is indispensable for the chemical strengthening. If the Na$_2$O content is less than 5%, sufficient ions are not exchanged, namely, the chemical strengthening does not improve the strength very much. On the other hand, if the content is more than 20%, the glass may have poor chemical resistance and poor weather resistance. Accordingly, the content is in the range of 5 to 20%, preferably 5 to 18%, and more preferably 7 to 16%.

K$_2$O is not an essential component, but acts as a flux for the glass together with Na$_2$O upon melting the glass, and acts also as an adjunct component for accelerating ion exchange when added in a small amount. However, when excessive K$_2$O is used, K$_2$O produces a mixed alkali effect with Na$_2$O to inhibit movement of Na$^+$ ions. As a result, the ions are less likely to be exchanged. If the K$_2$O content is more than 5%, the strength is less likely to be improved by ion exchange. Accordingly, the content is preferably not more than 5%.

The Na$_2$O+K$_2$O content is 5 to 20%, preferably 7 to 18%, and more preferably 10 to 17%.

CaO improves the chemical resistance of the glass, and additionally reduces the viscosity of the glass in the molten state. For the purpose improving the mass productivity of the glass, the CaO content is preferably not less than 2%. However, if the content exceeds 15%, it acts to inhibit movement of Na$^+$ ions. Accordingly, the content is in the range of 2 to 15%, preferably 4 to 13%, and more preferably 5 to 11%.

MgO is not an essential component, but is preferably used in place of CaO because it is less likely to inhibit movement of Na$^+$ ions than CaO. MgO, however, is not as effective as CaO in reducing the viscosity of the glass in the molten state. When the MgO content is more than 10%, it allows the glass to become highly viscous, which is a contributing factor to poor mass productivity of the glass. Accordingly, the content is in the range of 0 to 10%, preferably 0 to 8%, and more preferably 1 to 6%.

Al$_2$O$_3$ is not an essential component, but improves the strength and the ion exchange capacity. If the Al$_2$O$_3$ content is more than 5% on a mass basis, the glass becomes a highly viscous melt at high temperatures, and additionally is likely to be devitrified. Such a glass melt is difficult to form into a shape. Moreover, the ion exchange capacity is increased too much, and therefore a deep compressive stress layer may be formed. As a result, the chemical strengthening may make the glass difficult to cut. Accordingly, the content is in the range of 0 to 5%, preferably 1 to 4%, and more preferably 1 to 3% (not including 3).

As for the chemically strengthened glass according to one embodiment of the present invention, the glass before the ion exchange is substantially composed of the above components, but may further contain small amounts, specifically up to 1% (in total), of other components such as Fe$_2$O$_3$, TiO$_2$, CeO$_2$, and SO$_3$.

The glass before the ion exchange preferably has a strain point of 450 to 550°C, and more preferably 480 to 530°C. If the glass has a strain point of lower than 450°C, it does not have heat resistance high enough to withstand the chemical strengthening. On the other hand, if the strain point is higher than 550°C, the glass has too high a melting temperature, which causes poor production efficiency of glass plates and an increase in costs.

The glass before the ion exchange is preferably one formed by common glass forming processes such as a float process, a roll-out process, and a down-draw process. Among these, one formed by a float process is preferable.

The surface of the glass before the ion exchange prepared by such a forming process described above may remain as is, or may be roughened by hydrofluoric acid etching or the like to have functional properties such as antiglare properties.

The shape of the glass before the ion exchange is not particularly limited, and is preferably a plate shape. In cases where the glass has a plate shape, it may be a flat plate or a warped plate, and various shapes are included within the scope of the present invention. Shapes such as rectangular shapes and disc shapes are included within the definition of the flat plate in the present invention, and rectangular shapes are preferable among others.

The upper limit of the thickness of the glass before the ion exchange is not particularly limited, and is preferably 3 mm, more preferably 2 mm, still more preferably 1.8 mm, and particularly preferably 1.1 mm. The lower limit of the thickness of the glass before the ion exchange is also not particularly limited, and is preferably 0.05 mm, more preferably 0.1 mm, still more preferably 0.2 mm, and particularly preferably 0.3 mm.

In the chemically strengthened glass according to one embodiment of the present invention, the glass after the ion exchange has a surface compressive stress of 600 to 900 MPa. The lower limit of the surface compressive stress may be 620 MPa, and further may be 650 MPa. A higher surface compressive stress is preferred, but the upper limit may be 850 MPa, 800 MPa, or 750 MPa in light of an increase in an inner tensile stress caused by the higher compressive stress.

Further, in the chemically strengthened glass according to one embodiment of the present invention, the depth of the compressive stress layer formed at the surface of the glass is 5 to 20 μm, preferably 5 to 18 μm, more preferably 8 to 15 μm, and still more preferably 9 to 12 μm in light of both damage resistance and cutting easiness.

The surface compressive stress generated by ion exchange and the depth of the compressive stress layer formed at the surface of the glass after the ion exchange herein are both measured by photoelasticity with a surface stress meter utilizing optical waveguide effects. It should be noted that the measurement with the surface stress meter requires the refraction index and photoelasticity constant according to the glass composition of each glass before the ion exchange.

The chemical strengthened glass preferably has a Vickers hardness of 5.0 to 6.0 GPa, more preferably 5.2 to 6.0 GPa, and further more preferably 5.2 to 5.8 GPa. A glass having a Vickers hardness of less than 5.0 GPa has poor damage resistance, and therefore cannot withstand commercial use. On the other hand, a glass having a Vickers hardness of more than 6.0 GPa is difficult to cut.

The chemically strengthened glass according to one embodiment of the present invention has a feature as follows. The slope of a linear function is from -4 to -0.4, which is calculated by the following procedure: firstly, a quartic curve is prepared by approximating plotted data by a least-squares method on a first graph, where the vertical axis represents a proportion of an amount of the alkali metal ions B relative to the total amount of the alkali metal ions A and B, and the horizontal axis represents a depth of the glass from the surface; and secondly, the linear function is prepared by approximating plotted data by a least-squares method within the range of 0 to 5 um of a depth of the glass from the surface on a second graph, where the vertical axis represents an absolute value of a differential coefficient of the quartic curve, the differential coefficient being obtained by first differentiation of the quartic curve with respect to the depth of the glass from the surface, and the horizontal axis represents the depth of the glass from the surface.

The feature is explained below. In the following examples, the slope of the linear function is calculated from first and second graphs actually prepared.

First, the amount of alkali metal ions A and the amount of alkali metal ions B in a glass after the ion exchange are measured in the depth direction from the surface of the glass using an electron probe microanalyzer (EPMA). Specifically, the X-ray intensities (count rates) of the alkali metal ions A and the alkali metal ions B are measured, and the intensities are applied to a known intensities of each alkali metal ions in the composition of the glass to be ion exchanged to determine the proportion of the amount of the alkali metal ions B relative to the total amount of the alkali metal ions A and B.

Next, a first graph is prepared by plotting the proportion (mol%) of the amount of the alkali metal ions B relative to the total amount of the alkali metal ions A and B on the vertical axis, and a depth ($\mu$m) of the glass from the surface on the horizontal axis.

Next, the plotted data in the first graph are approximated with a quartic curve by a least-squares method.

Subsequently, a second graph is prepared by plotting an absolute value (mol%/$\mu$m) of a differential coefficient obtained by first differentiation of the quartic curve with respect to the depth of the glass from the surface on the vertical axis, and the depth ($\mu$m) of the glass from the surface on the horizontal axis.

Finally, the plotted data of the second graph within the range of 0 to 5 $\mu$m of the depth of the glass from the surface are approximated with the linear function by a least-squares method. The slope of the linear function is determined.

As for the chemically strengthened glass according to one embodiment of the present invention, the slope of the linear function is -4 to -0.4, preferably -3.5 to -0.5, and more preferably -3.5 to -1.

Further, in the chemically strengthened glass according to one embodiment of the present invention, the ratio ($\beta/\alpha$) of the depth ($\beta$) of the compressive stress layer to the minimum value ($\alpha$) of the depth of the glass from the surface when the absolute value of the differential coefficient in the second graph is 0 is preferably not less than 0.70, more preferably not less than 0.72, and still more preferably not less than 0.75.

(Method of manufacturing chemically strengthened glass)

A method of manufacturing a chemically strengthened glass according to one embodiment of the present invention includes a first step of contacting a glass article with a first salt that includes alkali metal ions A and B at a proportion P of the alkali metal ions A as expressed as a molar percentage of the total amount of the alkali metal ions A and B; and a subsequent second step of contacting the glass article with a second salt that includes the alkali metal ions A and B at a proportion Q of the alkali metal ions A as expressed as a molar percentage of the total amount of the alkali metal ions A and B, where the proportion Q is smaller than the proportion P.

First, in the first step, a glass article containing the alkali metal ions A is allowed to contact with a salt (first salt) containing the alkali metal ions A and B. Here, the alkali metal ions A and B are present at a proportion P in the first salt. The alkali metal ions B are introduced in the surface layer of the glass article in the first step, and part of the alkali metal ions A are left in the surface layer. As a result, the composition of the surface layer of the glass is modified, whereby the compressive stress relaxation occurred in the second step can be prevented.

Next, in the second step, the glass article obtained through the first step is allowed to contact with a salt (second salt) having a proportion Q of the alkali metal ions A which is lower than the proportion P.

The alkali metal ions A remaining in the glass article are replaced with the alkali metal ions B through the second step. The surface compressive stress generated by ion exchange in the second step is only slightly relaxed and mostly left because the glass article has already been subjected to the first step. Therefore, a high surface compressive stress can be obtained.

The expression "contacting a glass article with a salt" used for the first and second steps means to contact the glass article with a salt bath or submerge the glass article in a salt bath. Thus, the term "contact" used herein is intended to include "submerge" as well.

The contact with a salt can be performed by, for example, directly applying the salt in a paste form to the glass or submerging the glass in a molten salt heated to its melting point or higher. Among these, submerging the glass into a molten salt is preferred.

Specific examples of the alkali metal ions A and B are as described above. The salt may be one or two or more of nitrates, sulfates, carbonates, hydroxide salts, and phosphates.

The salt containing the alkali metal ions A may preferably be a sodium nitrate molten salt, and the salt containing the alkali metal ions B may preferably be a potassium nitrate molten salt. Therefore, the salt containing the alkali metal ions A and B may preferably be a molten salt composed of a mixture of sodium nitrate and potassium nitrate.

The proportions P and Q each represent a proportion of the alkali metal ions A as expressed as a molar percentage of the total amount of the alkali metal ions A and B. If the proportion P is too high, the composition of the surface layer of the glass is less likely to be modified in the first step, which is likely to make the surface of the glass cloudy. Therefore, the proportion P is preferably 5 to 50 mol% and more preferably 15 to 35 mol%.

If the proportion Q is too large, the surface compressive stress generated in the second step tends to be reduced. Therefore, the proportion Q is preferably 0 to 10 mol%, more preferably 0 to 2 mol%, and still more preferably 0 to 1 mol%. Thus, the second salt may contain only the alkali metal ions B, and may not substantially contain the alkali metal ions A.

The depth of the compressive stress layer formed through the first step is preferably 5 to 23 $\mu$m, as described above. The depth is more preferably 7 to 20 $\mu$m and still more preferably 10 to 18 $\mu$m.

In order to form a compressive stress layer with the above depth, the temperature (temperature of the first salt) in the first step is preferably controlled in the range of 400 to 530°C depending on the proportion P. The temperature of the first salt is more preferably 410 to 520°C and still more preferably 440 to 510°C.

Too high a temperature of the first salt tends to cause relaxation of the compressive stress generated in the first step. Further, too high a temperature of the first salt tends to provide a deeper compressive stress layer. This adversely affects the cutting easiness the resulting glass.

On the other hand, too low a temperature of the first salt may not produce a sufficient effect of modifying the surface layer of the glass in the first step, and therefore tends to cause stress relaxation in the second step.

It is preferable that the temperature (temperature of the second salt) in the second step is controlled in the range of 380 to 500°C such that a compressive stress layer having a depth of 5 to 20 $\mu$m is formed through the second step. The temperature of the second salt is more preferably 400 to 490°C and still more preferably 400 to 460°C. Too low a temperature of the second salt fails to allow the alkali metal ions A to be ion exchanged with the alkali metal ions B sufficiently, and therefore a desired level of a compressive stress may not be generated.

On the other hand, too high a temperature of the second salt tends to cause relaxation of the compressive stress generated in the first step and the compressive stress generated in the second step. Additionally, the higher temperature tends to provide a deeper compressive stress layer in the second step. This also adversely affects the cutting easiness the resulting glass.

In the method of manufacturing a chemically strengthened glass according to one embodiment of the present invention, a compressive stress layer with a depth of 5 to 23 $\mu$m is preferably formed at the surface of the glass through the first step by use of a first salt having a proportion P of 5 to 50 mol% in the first step.

Further, the proportion Q in the second salt used in the second step is preferably from 0 to 10 mol%.

A total time period of the contact of the glass article with the first salt in the first step and the contact of the glass article with the second salt in the second step is preferably 1 to 12 hours and more preferably 2 to 6 hours.

Specifically, too long a contact of the glass article with the first salt tends to cause relaxation of the compressive stress generated in the first step, and additionally tends to provide a deeper compressive stress layer. This adversely affects the cutting easiness the resulting glass.

On the other hand, too short a contact of the glass article with the first salt may not produce a sufficient effect of modifying the surface layer of the glass in the first step, and therefore tends to cause stress relaxation in the second step. Therefore, the time period of the contact of the glass article with the first salt in the first step is preferably 0.5 to 8 hours, more preferably 1 to 6 hours, and still more preferably 1 to 4 hours.

In the second step, it is preferable to reduce relaxation of the stress generated by ion exchange to a minimum. However, a longer contact of the glass article with the salt relaxes the stress more. Additionally, a longer contact tends to provide a deeper compressive stress layer in the second step. This also adversely affects the cutting easiness the resulting glass. On the other hand, too short a contact of the glass article with the second salt fails to allow the alkali metal ions A and the alkali metal ions B to be exchanged sufficiently, and therefore a desired level of a compressive stress may not be generated. Therefore, the time period of the contact of the glass article with the second salt in the second step is preferably 0.5 to 8 hours, more preferably 0.5 to 6 hours, and still more preferably 0.5 to 3 hours.

In the method of manufacturing a chemically strengthened glass according to one embodiment of the present invention, 30 to 75% by mass of the alkali metal ions A in the surface layer of the glass article are preferably replaced with the alkali metal ions B in the first step. Further, 50 to 100% of the alkali metal ions A remaining in the surface layer of the glass article are preferably replaced with the alkali metal ions B in the second step. The expression "50 to 100% of the alkali metal ions A remaining in the surface layer of the glass article" refers to 50 to 100% by mass of the alkali metal ions A remaining after the ion exchange in the first step.

Although the first and second salts are each a pure salt of the alkali metal ion A and/or the alkali metal ion B in the above description, this embodiment does not preclude the presence of stable metal oxides, impurities, and other salts that do not react with the salts, provided that they do not impair the purpose of the present invention. For example, the first or second salts may contain Ag ions or Cu ions as long as the proportion Q is in the range of 0 to 2 mol%.

EXAMPLES

The following examples are offered to more specifically illustrate the embodiment of the present invention. It should be noted that the present invention is not limited only to these examples.

(Example 1)

(1) Preparation of chemically strengthened glass

A 1.1-mm thick soda-lime glass ($SiO_2$: 71.6%, $Na_2O$: 12.5%, $K_2O$: 1.3%, CaO: 8.5%, MgO: 3.6%, $Al_2O_3$: 2.1%, $Fe_2O_3$: 0.10%, $SO_3$: 0.3% (on a mass basis)) was prepared by a float process, and an about 80-mm diameter disc substrate (hereinafter, referred to as glass substrate) was prepared therefrom.

The resulting glass substrate was submerged in a molten salt (first salt, proportion P: 20 mol%) bath composed of a mixture of 80 mol% of potassium nitrate and 20 mol% of sodium nitrate at a constant temperature of 483°C for 120 minutes, as a first step.

The glass substrate was then taken out from the bath, and the surface of the substrate was washed and dried.

In a subsequent second step, the dried glass substrate was submerged in a molten salt (second salt, proportion Q: 0 mol%) bath composed of 100 mol% of potassium nitrate at a constant temperature of 443°C for 60 minutes.

Thus, through the above steps, a chemically strengthened glass according to Example 1 was prepared.

(2) Evaluation of chemically strengthened glass (2-1) Measurement of surface compressive stress and depth of compressive stress layer

The resulting chemically strengthened glass was measured for the surface compressive stress and the depth of the compressive stress layer formed at the surface of the glass using a surface stress meter (FSM-60V, produced by Toshiba Glass Co., Ltd. (currently Orihara Industrial Co., Ltd.)). The refraction index was 1.52 and the photoelasticity constant was 26.8 ((nm/cm)/MPa) in the glass composition of the soda-lime glass used for the measurement with the surface stress meter.

The results of the measurement showed that the surface compressive stress and the depth of the compressive stress layer of the chemically strengthened glass according to Example 1 were 720 MPa and 13 $\mu$m, respectively. The depth of the compressive stress layer formed through the first step was 15 $\mu$m.

(2-2) Evaluation of cutting easiness

Scribing (load weight: 2 kg) of the resulting chemically strengthened glass was performed according to a general cutting manner using a commercially-available carbide wheel glass cutter.

The cutting easiness was evaluated on a two-point scale of "good" or "bad".

The result of the evaluation showed that the cutting easiness of the chemically strengthened glass according to Example 1 was evaluated as "good".

(2-3) Calculation of slope of linear function

First, the amount of sodium ions and the amount of potassium ions in the obtained chemically strengthened glass were measured in the depth direction from the surface of the glass using an electron probe microanalyzer (JXA-8100, produced by JEOL). Specifically, X-ray intensities (count rate) of sodium ions and potassium ions were measured, and the intensities were related to a composition of the soda-lime glass to determine a proportion (mol%) of the amount of potassium ions relative to the total amount of sodium ions and potassium ions.

The measurement was performed under the conditions of an accelerating voltage of 15.0 kV; an illuminating current of $2.00 \times 10^{-8}$ mA; and a measurement time of 30 msec.

Next, a first graph was prepared by plotting the proportion (mol%) of the amount of potassium ions relative to the total amount of sodium ions and potassium ions on the vertical axis, and the depth (μm) of the glass from the surface on the horizontal axis.

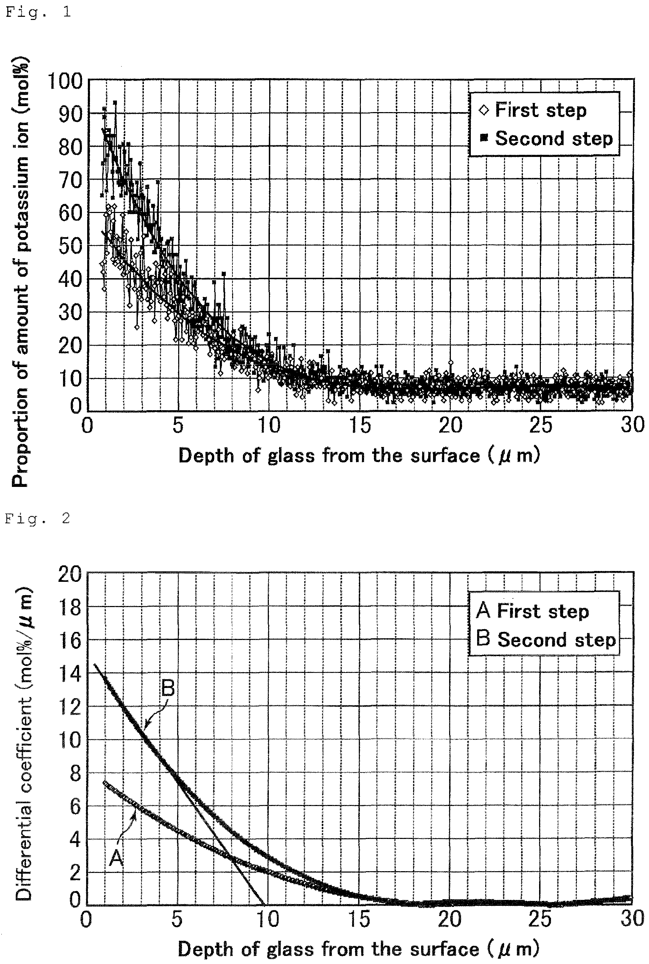

Fig. 1 shows the first graph as for the chemically strengthened glass according to Example 1. Fig. 1 also shows the result after the first step.

The plotted data in the first graph shown in Fig. 1 were approximated with a quartic curve by a least-squares method.

The quartic curve after the first step was represented by the equation:

$$y=0.0000621x^4-0.0093241x^3+0.4373531x^2-8.2029134x+60.5819851$$

The quartic curve after the second step was represented by the equation:

$$y=0.0002487x^4-0.0257618x^3+0.9658213x^2-15.4980379x+96.8925167$$

Subsequently, a second graph was prepared by plotting the absolute value (mol%/μm) of the differential coefficient obtained by first differentiation of the quartic curve with respect to the depth of the glass from the surface on the vertical axis, and the depth of the glass from the surface on the horizontal axis.

Fig. 2 shows the second graph as for the chemically strengthened glass according to Example 1. Fig. 2 also shows the result after the first step.

The plotted data within the range of 0 to 5 μm of the depth of the chemically strengthened glass from the surface in the second graph shown in Fig. 2 were approximated with a linear function by a least-squares method.

The linear function after the second step was represented by the equation:

$$y=-1.5393x+15.107$$

This shows that the slope of the linear function of the chemically strengthened glass according to Example 1 was -1.5393.

Fig. 2 also shows that the minimum value of the depth of the glass from the surface when the absolute value of the differential coefficient in the second graph was 0 was about 17 μm in the chemically strengthened glass of Example 1. Therefore, the ratio of the depth of the compressive stress layer to the minimum value was 0.76.

(Examples 2 to 4)

Chemically strengthened glasses were prepared as in Example 1 except that, the temperature of the first salt used in the first step and the proportion P in the first salt were changed, and the temperature of the second salt used in the second step and the proportion Q in the second salt were changed, in accordance with Table 1. The obtained chemically strengthened glasses were evaluated. Table 1 also shows the depth of the compressive stress layer formed through the first step.

[Table 1]

| | Chemical strengthening condition | | | | | | | Evaluation of chemically strengthened glass | |
| --- | --- | --- | --- | --- | --- | --- | --- | --- | --- |
| | First step | | | | Second step | | | Surface compressive stress (MPa) | Depth of compressive stress layer ($\mu$m) |
| | Proportion P (mol%) | Temperature (°C) | Time: (min) | Depth of compressive stress layer formed through first step ($\mu$m) | Proportion Q (mol%) | Temperature (°C) | Time (min) | | |
| Example 1 | 20 | 483 | 120 | 15 | 0 | 443 | 60 | 720 | 13 |
| Example 2 | 10 | 483 | 120 | 16 | 0 | 443 | 60 | 640 | 15 |
| Example 3 | 50 | 483 | 120 | 12 | 0 | 443 | 60 | 810 | 10 |
| Example 4 | 30 | 513 | 120 | 23 | 0 | 443 | 60 | 740 | 16 |
| Comparative Example 1 | 0 | 463 | 90 | - | - | - | - | 550 | 11 |
| Comparative Example 2 | 40 | 460 | 16 hours | 26 | 0 | 460 | 4 hours | 550 | 23 |
| Comparative Example 3 | 0 | 503 | 120 | 29 | 0 | 483 | 60 | 330 | 33 |

Table 1 shows the surface compressive stresses and the depths of the compressive stress layers of the chemically strengthened glasses according to Examples 2 to 4.

Further, the cutting easiness of the chemically strengthened glasses according to Examples 2 to 4 were all evaluated as "good".

(Examples 5 to 25)

Chemically strengthened glasses after the first step were each obtained through the first step as in Example 1 except that the temperature of the salt in the first step was controlled in the range of 400 to 530°C depending on the proportion P so that a specific depth (5 to 23 $\mu$m) of a compressive stress layer was formed at the surface of the glass after the first step.

Next, the chemically strengthened glasses after the second step were each obtained through the second step as in Example 1 except that the temperature of the salt was controlled in the range of 380 to 500°C depending on the proportion Q so that, after the second step, the surface compressive stress was 600 to 900 MPa and the compressive stress layer formed at the surface of the glass had a depth of 5 to 20 $\mu$m.

A total time period of the contact of the glass article with the first salt in the first step and the contact of the glass article with the second salt in the second step was controlled in the range of 1 to 12 hours, depending on the proportions P and Q.

[Table 2]

| | | Chemical strengthening condition | | | Evaluation of chemically strengthened glass | |
| --- | --- | --- | --- | --- | --- | --- |
| | | First step | | Second step | Surface compressive stress (MPa) | Depth of compressive stress layer ($\mu$m) |
| | | Proportion P (mol%) | Depth of compressive stress layer formed through first step ($\mu$m) | Proportion Q (mol%) | | |
| Example 5 | | 30 | 14 | 0 | 805 | 12 |
| Example 6 | | 20 | 15 | 0 | 610 | 18 |
| Example 7 | | 30 | 19 | 0 | 730 | 16 |
| Example 8 | | 20 | 20 | 0 | 660 | 17 |
| Example 9 | | 30 | 17 | 0 | 650 | 17 |
| Example 10 | | 20 | 17 | 0 | 705 | 16 |
| Example 11 | | 20 | 11 | 0 | 790 | 11 |
| Example 12 | | 20 | 11 | 0 | 805 | 10 |
| Example 13 | | 20 | 11 | 0 | 835 | 9 |
| Example 14 | | 20 | 11 | 0 | 760 | 9 |
| Example 15 | | 20 | 14 | 0 | 745 | 10 |
| Example 16 | | 20 | 14 | 0 | 790 | 8 |

(continued)

| | Chemical strengthening condition | | | Evaluation of chemically strengthened glass | |
|---|---|---|---|---|---|
| | First step | | Second step | Surface compressive stress (MPa) | Depth of compressive stress layer (μm) |
| | Proportion P (mol%) | Depth of compressive stress layer formed through first step (μm) | Proportion Q (mol%) | | |
| Example 17 | 20 | 14 | 0 | 805 | 8 |
| Example 18 | 20 | 7 | 0 | 710 | 9 |
| Example 19 | 20 | 7 | 0 | 780 | 8 |
| Example 20 | 20 | 15 | 0.5 | 675 | 13 |
| Example 21 | 23 | 15 | 2 | 610 | 13 |
| Example 22 | 20 | 14 | 0 | 765 | 12 |
| Example 23 | 20 | 16 | 0 | 740 | 14 |
| Example 24 | 20 | 14 | 0 | 760 | 12 |
| Example 25 | 20 | 15 | 0 | 765 | 13 |

Table 2 shows the surface compressive stresses and the depths of the compressive stress layers of the chemically strengthened glasses according to Examples 5 to 25. Table 2 also shows the depths of the compressive stress layers obtained through the first step.

The cutting easiness of the chemically strengthened glasses according to Examples 5 to 25 were all evaluated as "good".

First graphs and second graphs as for Examples 4, 5, 6, and 19 were prepared as in Example 1. The plotted data within the range of 0 to 5 μm of the depth of the glass from the surface in each second graph were approximated with a linear function by a least-squares method, and the slope of the linear function was determined. Further, the ratio of the depth of the compressive stress layer to a minimum value of the depth of the glass from the surface when the absolute value of the differential coefficient in the second graph was 0 was determined for each of Examples 4, 5, 6, and 19.

Table 3 shows the results.

[Table 3]

| | Slope of linear function (Note 1) | Minimum value $\alpha$ (Note 2) (μm) | Depth $\beta$ of compressive stress layer (μm) | $\beta / \alpha$ |
|---|---|---|---|---|
| Example 1 | -1.5393 | 17 | 13 | 0.76 |
| Example 4 | -1,0201 | 21 | 16 | 0.76 |
| Example 5 | -1.6145 | 16 | 12 | 0.75 |
| Example 6 | -0.4630 | 24 | 18 | 0.75 |
| Example 19 | -3.3611 | 11 | 8 | 0.73 |

(continued)

|  | Slope of linear function (Note 1) | Minimum value $\alpha$ (Note 2) ($\mu$m) | Depth $\beta$ of compressive stress layer ($\mu$m) | $\beta / \alpha$ |
|---|---|---|---|---|
| Comparative Example 1 | -1.5708 | 17 | 11 | 0.65 |
| Comparative Example 2 | -0.3184 | 27 | 23 | 0.85 |

(Note 1) Slope of linear function determined by approximating, by a least-squares method, plotted data within the range of 0 to 5 $\mu$m of the depth of the glass from the surface in second graph
(Note 2) Minimum value of the depth of the glass from the surface when the absolute value of the differential coefficient in second graph is 0

(Comparative Example 1)

In Comparative Example 1, one-step chemical strengthening was performed.

That is, a glass substrate prepared as in Example 1 was submerged in a molten salt bath composed of 100 mol% of potassium nitrate at a constant temperature of 463°C for 90 minutes.

Thus, through the above steps, a chemically strengthened glass according to Comparative Example 1 was prepared.

The obtained chemically strengthened glass was evaluated as in Example 1.

The results of the measurement showed that the surface compressive stress and the depth of the compressive stress layer of the chemically strengthened glass according to Comparative Example 1 were 550 MPa and 11 $\mu$m, respectively.

Further, the cutting easiness of the chemically strengthened glass according to Comparative Example 1 was evaluated as "good".

The evaluation showed that the cutting easiness of the chemically strengthened glass according to Comparative Example 1 was a similar degree as that of the chemically strengthened glass according to Example 1, but the surface compressive stress of the glass according to Comparative Example 1 was lower than that of the glass according to Example 1.

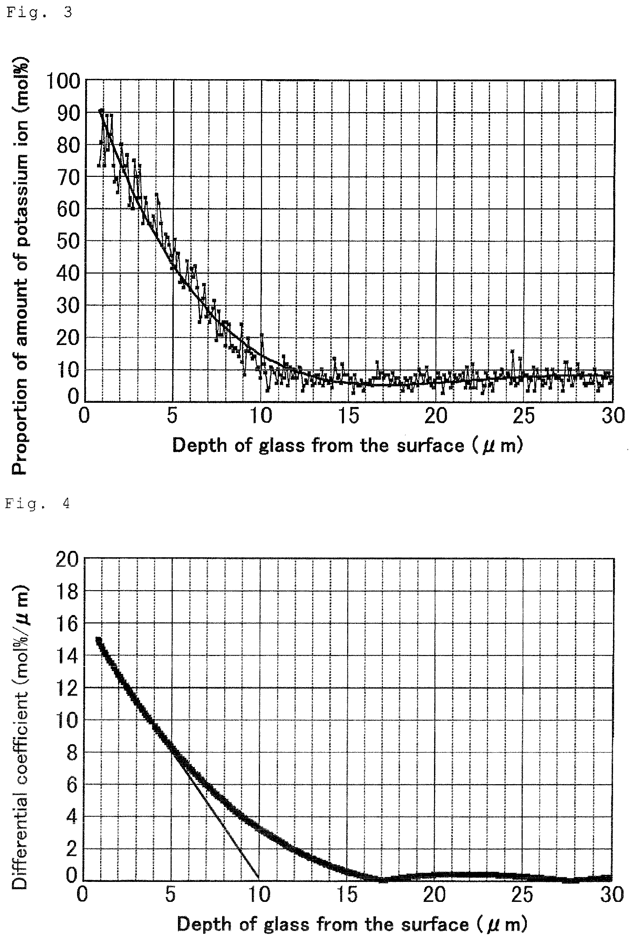

Fig. 3 shows the first graph as for the chemically strengthened glass according to Comparative Example 1.

The quartic curve was represented by the equation:

$$y=0.000223x^4-0.024813x^3+0.985459x^2-16.416500x+102.919588$$

Fig. 4 shows the second graph as for the chemically strengthened glass according to Comparative Example 1.

The linear function was represented by the equation:

$$y=-1.5708x+15.968$$

This shows that the slope of the linear function of the chemically strengthened glass according to Comparative Example 1 was -1.5708.

Fig. 4 also shows that, the minimum value of the depth of the glass from the surface when the absolute value of the differential coefficient in the second graph was 0 was about 17 $\mu$m in the chemically strengthened glass according to Comparative Example 1,. Therefore, the ratio of the depth of the compressive stress layer to the above minimum value was 0.65.

This shows that the ratio of the depth of the compressive stress layer to the minimum value in the chemically strengthened glass according to Comparative Example 1 is lower than that in the chemically strengthened glass according to Example 1. Therefore, the chemically strengthened glass according to Comparative Example 1 has a large percentage of a region which is ion exchanged, but does not contribute to the generation of a compressive stress. Further, a compressive stress generated by potassium ions introduced in the glass may not be efficiently used.

(Comparative Example 2)

In Comparative Example 2, a chemically strengthened glass was prepared under the conditions described in Example 1 in Patent Literature 4.

First, a glass substrate prepared as in Example 1 was submerged in a molten salt (first salt, proportion P: 40 mol%) bath composed of a mixture of 60 mol% of potassium nitrate and 40 mol% of sodium nitrate at a constant temperature of 460°C for 16 hours, as a first step.

The glass substrate was taken out from the bath, and the surface of the substrate was washed and dried.

As a subsequent second step, the dried glass substrate was submerged in a molten salt (second salt, proportion Q: 0 mol%) bath composed of 100 mol% of potassium nitrate at a constant temperature of 460°C for 4 hours.

Thus, through the above steps, a chemically strengthened glass according to Comparative Example 2 was prepared.

The resulting chemically strengthened glass was evaluated as in Example 1.

The results of the measurement showed that the surface compressive stress and the depth of the compressive stress layer of the chemically strengthened glass according to Comparative Example 2 were 550 MPa and 23 $\mu$m, respectively.

The evaluation showed that the surface compressive stress of the chemically strengthened glass according to Comparative Example 2 prepared in accordance with Example 1 in Patent Literature 4 did not reach the same degree of the surface compressive stress of the chemically strengthened glass according to Example 1, and the depth of the compressive stress layer of the glass according to Comparative Example 2 was also larger than that of the glass according to Example 1.

Further, the cutting easiness of the chemically strengthened glass according to Comparative Example 2 was evaluated as "bad".

The evaluation showed that the cutting easiness of the chemically strengthened glass according to Comparative Example 2 was worse than that of the chemically strengthened glass according to Example 1.

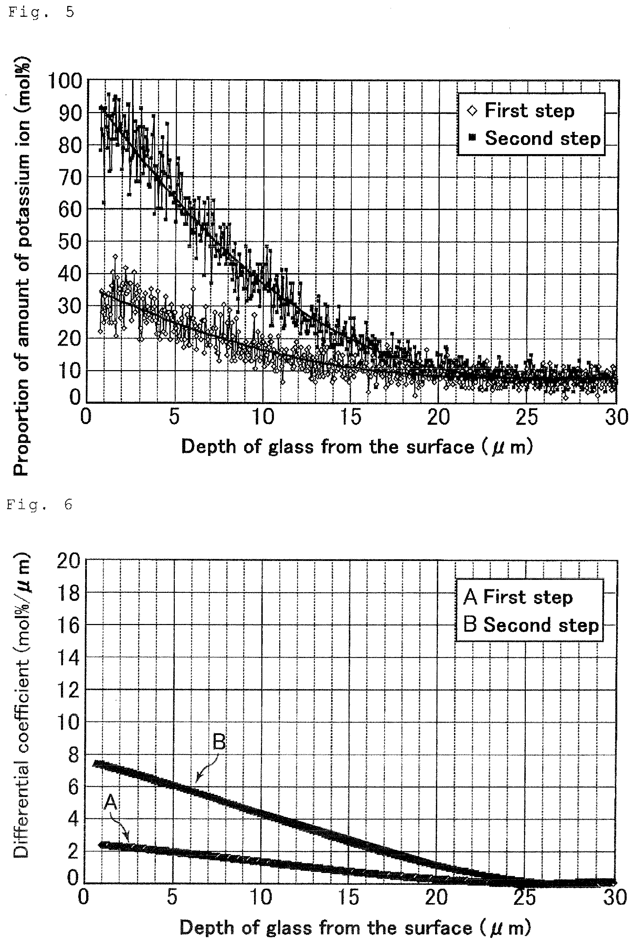

Fig. 5 shows the first graph as for the chemically strengthened glass according to Comparative Example 2. Fig. 5 also shows the results after the first step.

The quartic curve after the first step was represented by the equation:

$$y=0.0000320x^4-0.0011860x^3+0.0446535x^2-2.4871683x+36.0336495$$

The quartic curve after the second step was represented by the equation:

$$y=0.0000737x^4-0.0026939x^3+0.1404683x^2-7.6305701x+97.4333575$$

Fig. 6 shows the second graph as for the chemically strengthened glass according to Comparative Example 2. Fig. 6 also shows the results after the first step.

The linear function after the second step was represented by the equation:

$$y=-0.3184x+7.6693$$

The slope of the linear function as for the chemically strengthened glass according to Comparative Example 2 was -0.3184.

This shows that the slope of the linear function as for the chemically strengthened glass according to Comparative Example 2 is larger than that of the linear function as for the chemically strengthened glass according to Example 1. The results shows that the surface compressive stress of the chemically strengthened glass according to Comparative Example 2 is lower than that of the chemically strengthened glass according to Example 1, and the cutting easiness of the glass according to Comparative Example 2 is also worse than that of the glass according to Example 1.

Fig. 6 also showed that, the minimum value of the depth of the glass from the surface when the absolute value of the differential coefficient in the second graph is 0 was about 27 $\mu$m in the chemically strengthened glass according to Comparative Example 2. Therefore, the ratio of the depth of the compressive stress layer to the minimum value was 0.85.

(Comparative Example 3)

In Comparative Example 3, a first salt having a proportion P of 0 mol% was used.

First, as a first step, a glass substrate prepared as in Example 1 was submerged in a molten salt (first salt, proportion P: 0 mol%) bath composed of 100 mol% of potassium nitrate at a constant temperature of 503°C for 120 minutes.

Next, the glass substrate was taken out from the bath, and its surface was washed and dried.

As a subsequent second step, the dried glass substrate was submerged in a molten salt (second salt, proportion Q: 0 mol%) bath composed of 100 mol% of potassium nitrate at a constant temperature of 483°C for 60 minutes.

Thus, through the above steps, a chemically strengthened glass according to Comparative Example 3 was prepared.

The obtained chemically strengthened glass was measured for the surface compressive stress and the depth of the compressive stress layer, and was evaluated for the cutting easiness.

The results of the measurement showed that the surface compressive stress and the depth of the compressive stress layer of the chemically strengthened glass according to Comparative Example 3 were 330 MPa and 33 $\mu$m, respectively.

Further, the cutting easiness of the chemically strengthened glass according to Comparative Example 3 was evaluated as "bad".

The result of the evaluation showed that the chemically strengthened glass according to Comparative Example 3 having a deep compressive stress layer had a critical impact on the cutting easiness.

Further, the chemically strengthened glass according to Comparative Example 3 having a low surface compressive stress may not withstand practical use.

**Claims**

1. A chemically strengthened glass manufactured by ion exchange of a surface layer of a glass article to replace alkali metal ions A which are the largest in amount among all the alkali metal ion components of the glass article with alkali metal ions B having a larger ionic radius than the alkali metal ions A,

   wherein the glass article before the ion exchange is made of soda-lime glass substantially composed of $SiO_2$: 65 to 75%, $Na_2O+K_2O$: 5 to 20%, CaO: 2 to 15%, MgO: 0 to 10%, and $Al_2O_3$: 0 to 5% on a mass basis,
   the chemically strengthened glass after the ion exchange has a surface compressive stress of 600 to 900 MPa, and has a compressive stress layer with a depth of 5 to 20 $\mu$m at a surface of the glass, and
   the slope of a linear function is from -4 to -0.4, which is calculated by the following procedure:

   firstly, a quartic curve is prepared by approximating plotted data by a least-squares method on a first graph, where the vertical axis represents a proportion of an amount of the alkali metal ions B relative to a total amount of the alkali metal ions A and B, and the horizontal axis represents a depth of the glass from the surface; and secondly, the linear function is prepared by approximating plotted data by a least-squares method within the range of 0 to 5 um of a depth of the glass from the surface on a second graph, where the vertical axis represents an absolute value of a differential coefficient of the quartic curve, the differential coefficient being obtained by first differentiation of the quartic curve with respect to the depth of the glass from the surface, and the horizontal axis represents the depth of the glass from the surface.

2. The chemically strengthened glass according to claim 1,
   wherein the ratio of the depth of the compressive stress layer to a minimum value of the depth of the glass from the surface when the absolute value of the differential coefficient in the second graph is 0 is not less than 0.70.

3. The chemically strengthened glass according to claim 1 or 2,
   wherein the ion exchange includes:

   a first step of contacting the glass article with a first salt that includes the alkali metal ions A and B at a proportion P of the alkali metal ions A as expressed as a molar percentage of a total amount of the alkali metal ions A and B; and
   a subsequent second step of contacting the glass article with a second salt that includes the alkali metal ions A and B at a proportion Q of the alkali metal ions A as expressed as a molar percentage of a total amount of the alkali metal ions A and B, where the proportion Q is smaller than the proportion P.

**4.** The chemically strengthened glass according to claim 3,
wherein, in the first step, 30 to 75% by mass of the alkali metal ions A in the surface layer of the glass article are replaced with the alkali metal ions B, and
in the second step, 50 to 100% of the alkali metal ions A remaining in the surface layer of the glass article are replaced with the alkali metal ions B.

**5.** The chemically strengthened glass according to claim 3 or 4,
wherein the proportion P in the first salt used in the first step is from 5 to 50 mol%, and
the depth of the compressive stress layer formed through the first step at the surface of the glass is from 5 to 23 um.

**6.** The chemically strengthened glass according to any one of claims 3 to 5,
wherein the proportion Q in the second salt used in the second step is from 0 to 10 mol%.

**7.** A method of manufacturing the chemically strengthened glass according to claim 1 or 2, comprising the steps of:

a first step of contacting a glass article with a first salt that includes the alkali metal ions A and B at a proportion P of the alkali metal ions A as expressed as a molar percentage of a total amount of the alkali metal ions A and B; and
a subsequent second step of contacting the glass article with a second salt that includes the alkali metal ions A and B at a proportion Q of the alkali metal ions A as expressed as a molar percentage of a total amount of the alkali metal ions A and B, where the proportion Q is smaller than the proportion P.

**8.** The method according to claim 7,
wherein, in the first step, 30 to 75% by mass of the alkali metal ions A in the surface layer of the glass article are replaced with the alkali metal ions B, and in the second step, 50 to 100% of the alkali metal ions A remaining in the surface layer of the glass article are replaced with the alkali metal ions B.

**9.** The method according to claim 7 or' 8,
wherein the proportion P in the first salt used in the first step is from 5 to 50 mol%, and
the depth of the compressive stress layer formed through the first step at the surface of the glass is 5 to 23 $\mu$m.

**10.** The method according to any one of claims 7 to 9,
wherein the proportion Q in the second salt used in the second step is from 0 to 10 mol%.

**Patentansprüche**

**1.** Ein chemisch gehärtetes Glas, das durch Ionenaustausch einer Oberflächenschicht eines Glasgegenstands hergestellt ist, um Alkalimetallionen A, die die größte Menge unter allen Alkalimetallionenkomponenten des Glasgegenstands aufweisen, durch Alkalimetallionen B, die einen größeren Ionenradius aufweisen als die Alkalimetallionen A, zu ersetzen,
wobei der Glasgegenstand vor dem Ionenaustausch aus Kalk-Natron-Glas besteht, das im Wesentlichen zusammengesetzt ist aus $SiO_2$; 65 bis 75%, $Na_2O + K_2O$: 5 bis 20%, CaO: 2 bis 15%, MgO: 0 bis 10% und $Al_2O_3$: 0 bis 5% auf Massenbasis,
wobei das chemisch gehärtete Glas nach dem Ionenaustausch eine Oberflächendruckspannung von 600 bis 900 MPa aufweist und eine Druckspannungsschicht mit einer Tiefe von 5 bis 20 $\mu$m an einer Oberfläche des Glases aufweist, und
die Steigung einer linearen Funktion, die nach der folgenden Vorgehensweise berechnet wird, von -4 bis -0,4 beträgt:

erstens wird eine Kurve vierten Grades durch Approximation der aufgetragenen Daten nach der Methode der kleinsten Quadrate in einem ersten Diagramm erstellt, wobei die vertikale Achse einen Anteil einer Menge der Alkalimetallionen B relativ zu einer Gesamtmenge der Alkalimetallionen A und B darstellt, und die horizontale Achse eine Tiefe des Glases von der Oberfläche darstellt; und
zweitens wird die lineare Funktion durch Approximieren von geplotteten Daten durch eine Methode der kleinsten Quadrate innerhalb des Bereichs von 0 bis 5 $\mu$m einer Tiefe des Glases von der Oberfläche in einem zweiten Diagramm erstellt, wobei die vertikale Achse einen Absolutwert eines Differentialkoeffizienten der Kurve vierten Grades darstellt, wobei der Differentialkoeffizient durch eine erste Ableitung der Kurve vierten Grades in Bezug auf die Tiefe des Glases von der Oberfläche erhalten wird, und die horizontale Achse die Tiefe des Glases von der Oberfläche darstellt.

2. Das chemisch gehärtete Glas gemäß Anspruch 1,
wobei das Verhältnis der Tiefe der Druckspannungsschicht zu einem Minimalwert der Tiefe des Glases von der Oberfläche, wenn der Absolutwert des Differentialkoeffizienten in dem zweiten Diagramm 0 ist, nicht geringer als 0,70 ist.

3. Das chemisch gehärtete Glas gemäß Anspruch 1 oder 2,
wobei der Ionenaustausch beinhaltet:

einen ersten Schritt des Inkontaktbringens des Glasgegenstands mit einem ersten Salz, das die Alkalimetallionen A und B in einem Anteil P der Alkalimetallionen A, ausgedrückt als Molprozentsatz einer Gesamtmenge der Alkalimetallionen A und B, beinhaltet; und
einen anschließenden zweiten Schritt des Inkontaktbringens des Glasgegenstands mit einem zweiten Salz, das die Alkalimetallionen A und B mit einem Anteil Q der Alkalimetallionen A, ausgedrückt als Molprozentsatz einer Gesamtmenge der Alkalimetallionen A und B, beinhaltet, wobei der Anteil Q kleiner als der Anteil P ist.

4. Das chemisch gehärtete Glas gemäß Anspruch 3,
wobei in dem ersten Schritt 30 bis 75 Massen-% der Alkalimetallionen A in der Oberflächenschicht des Glasgegenstands durch die Alkalimetallionen B ersetzt werden und
in dem zweiten Schritt 50 bis 100% der in der Oberflächenschicht des Glasgegenstands verbliebenen Alkalimetallionen A, durch die Alkalimetallionen B ersetzt werden.

5. Das chemisch gehärtete Glas gemäß Anspruch 3 oder 4, wobei der Anteil P in dem im ersten Schritt verwendeten ersten Salz von 5 bis 50 Mol% beträgt und
die Tiefe der Druckspannungsschicht, die durch den ersten Schritt an der Oberfläche des Glases gebildet wird, von 5 bis 23 $\mu$m beträgt.

6. Das chemisch gehärtete Glas gemäß einem der Ansprüche 3 bis 5, wobei der Anteil Q in dem im zweiten Schritt verwendeten zweiten Salz von 0 bis 10 Mol-% beträgt.

7. Ein Verfahren zur Herstellung des chemisch gehärteten Glases gemäß Anspruch 1 oder 2, umfassend die Schritte:

einen ersten Schritt des Inkontaktbringens eines Glasgegenstands mit einem ersten Salz, das die Alkalimetallionen A und B mit einem Anteil P der Alkalimetallionen A, ausgedrückt als Molprozentsatz einer Gesamtmenge der Alkalimetallionen A und B, beinhaltet; und
einen anschließenden zweiten Schritt des Inkontaktbringens des Glasgegenstands mit einem zweiten Salz, das die Alkalimetallionen A und B mit einem Anteil Q der Alkalimetallionen A, ausgedrückt als Molprozentsatz einer Gesamtmenge der Alkalimetallionen A und B, beinhaltet, wobei der Anteil Q kleiner als der Anteil P ist.

8. Das Verfahren gemäß Anspruch 7,
wobei in dem ersten Schritt 30 bis 75 Massen-% der Alkalimetallionen A in der Oberflächenschicht des Glasgegenstands durch die Alkalimetallionen B ersetzt werden und in dem zweiten Schritt 50 bis 100% der in der Oberflächenschicht des Glasgegenstands verbliebenen Alkalimetallionen A durch die Alkalimetallionen B ersetzt werden.

9. Das Verfahren gemäß Anspruch 7 oder 8,
wobei der Anteil P in dem im ersten Schritt verwendeten ersten Salz von 5 bis 50 Mol-% beträgt und
die Tiefe der Druckspannungsschicht, die durch den ersten Schritt an der Oberfläche des Glases gebildet wird, 5 bis 23 $\mu$m beträgt.

10. Das Verfahren gemäß einem der Ansprüche 7 bis 9, wobei der Anteil Q in dem im zweiten Schritt verwendeten zweiten Salz von 0 bis 10 Mol-% beträgt.

**Revendications**

1. Verre trempé chimiquement fabriqué par échange d'ions d'une couche de surface d'un article en verre pour remplacer des ions de métal alcalin A qui représentent la quantité la plus élevée parmi tous les composants ions de métal alcalin de l'article en verre par des ions de métal alcalin B ayant un plus grand rayon ionique que les ions de métal alcalin A,

dans lequel l'article en verre avant l'échange d'ions consiste en masse de verre sodocalcique sensiblement composé de $SiO_2$ : de 65 à 75 %, $Na_2O+K_2O$ : de 5 à 20 %, CaO : de 2 à 15 %, MgO : de 0 à 10 % et $Al_2O_3$ : de 0 à 5 %,

le verre trempé chimiquement après l'échange d'ions a une résistance à la compression superficielle de 600 à 900 MPa, et a une couche de résistance à la compression ayant une profondeur de 5 à 20 $\mu$m au niveau d'une surface du verre, et

la pente d'une fonction linéaire est de -4 à -0,4, qui est calculée par la procédure suivante :

premièrement, une courbe quartique est préparée par approximation de données tracées par un procédé des moindres carrés sur un premier graphe, où l'axe vertical représente une proportion d'une quantité des ions de métal alcalin B par rapport à une quantité totale des ions de métal alcalin A et B, et l'axe horizontal représente une profondeur du verre à partir de la surface ; et

deuxièmement, la fonction linéaire est préparée par approximation de données tracées par un procédé des moindres carrés à l'intérieur de la plage de 0 à 5 $\mu$m d'une profondeur du verre à partir de la surface sur un second graphe, où l'axe vertical représente une valeur absolue d'un coefficient différentiel de la courbe quartique, le coefficient différentiel étant obtenu par une première différenciation de la courbe quartique par rapport à la profondeur du verre à partir de la surface, et l'axe horizontal représente la profondeur du verre à partir de la surface.

2. Verre trempé chimiquement selon la revendication 1,
dans lequel le rapport de la profondeur de la couche de résistance à la compression à une valeur minimale de la profondeur du verre à partir de la surface lorsque la valeur absolue du coefficient différentiel sur le second graphe vaut 0 n'est pas inférieur à 0,70.

3. Verre trempé chimiquement selon la revendication 1 ou 2,
dans lequel l'échange d'ions inclut :

une première étape de mise en contact de l'article en verre avec un premier sel qui inclut les ions de métal alcalin A et B en une proportion P des ions de métal alcalin A telle qu'exprimée par un pourcentage molaire d'une quantité totale des ions de métal alcalin A et B ; et

une seconde étape ultérieure de mise en contact de l'article en verre avec un second sel qui inclut les ions de métal alcalin A et B en une proportion Q des ions de métal alcalin A telle qu'exprimée par un pourcentage molaire d'une quantité totale des ions de métal alcalin A et B, où la proportion Q est inférieure à la proportion P.

4. Verre trempé chimiquement selon la revendication 3,
dans lequel, dans la première étape, 30 à 75 % en masse des ions de métal alcalin A dans la couche de surface de l'article en verre sont remplacés par les ions de métal alcalin B, et

dans la seconde étape, 50 à 100 % des ions de métal alcalin A restant dans la couche de surface de l'article en verre sont remplacés par les ions de métal alcalin B.

5. Verre trempé chimiquement selon la revendication 3 ou 4,
dans lequel la proportion P dans le premier sel utilisée dans la première étape est de 5 à 50 %mole, et
la profondeur de la couche de résistance à la compression formée lors de la première étape à la surface du verre est de 5 à 23 $\mu$m.

6. Verre trempé chimiquement selon l'une quelconque des revendications 3 à 5, dans lequel la proportion Q dans le second sel utilisée dans la seconde étape est de 0 à 10 %mole.

7. Procédé de fabrication du verre trempé chimiquement selon la revendication 1 ou 2, comprenant les étapes de :

une première étape de mise en contact d'un article en verre avec un premier sel qui inclut les ions de métal alcalin A et B en une proportion P des ions de métal alcalin A exprimée en un pourcentage molaire d'une quantité totale des ions de métal alcalin A et B ; et

une seconde étape ultérieure de mise en contact de l'article en verre avec un second sel qui inclut les ions de métal alcalin A et B en une proportion Q des ions de métal alcalin A exprimée en un pourcentage molaire d'une quantité totale des ions de métal alcalin A et B, où la proportion Q est inférieure à la proportion P.

**8.** Procédé selon la revendication 7,
dans lequel, dans la première étape, 30 à 75 % en masse des ions de métal alcalin A dans la couche de surface de l'article en verre sont remplacés par les ions de métal alcalin B, et dans la seconde étape, 50 à 100 % des ions de métal alcalin A restant dans la couche de surface de l'article en verre sont remplacés par les ions de métal alcalin B.

**9.** Procédé selon la revendication 7 ou 8,
dans lequel la proportion P dans le premier sel utilisée dans la première étape est de 5 à 50 %mole, et la profondeur de la couche de résistance à la compression formée lors de la première étape à la surface du verre est de 5 à 23 $\mu$m.

**10.** Procédé selon l'une quelconque des revendications 7 à 9,
dans lequel la proportion Q dans le second sel utilisée dans la seconde étape est de 0 à 10 %mole.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004359504 A
- JP 2004083378 A
- JP H818850 B
- JP S5417765 B
- JP 2011213576 A
- JP 2010275126 A